# FASCICULE DE BREVET EUROPEEN

(11) **EP 2 340 142 B1**
(45) Date de publication et mention de la délivrance du brevet: **16.11.2022**
(21) Numéro de dépôt: 09815673.0
(22) Date de dépôt: 21.09.2009
(51) Int. Cl.: B23K 20/02, B23K 35/30, B23K 35/00, F01D 5/02, B23K 101/00

(54) **PROCÉDÉ D'ASSEMBLAGE DE PIECES EN TITANE ET EN ACIER PAR SOUDAGE DIFFUSION**
VERFAHREN ZUM VERBINDEN VON EINEM WERKSTÜCK AUS TITAN MIT EINEM WERKSTÜCK AUS STAHL MITTELS DIFFUSIONSSCHWEISSEN
METHOF OF JOINING A TITANIUM WORKPIECE WITH A STEEL WORKPIECE THROUGH DIFFUSION BONDING

(30) Priorité: 24.09.2008 FR 0805249
(43) Date de publication de la demande: 06.07.2011
(73) Titulaire: Safran Aircraft Engines, 75015 Paris (FR)
(72) Inventeur: COUTURIER, Raphaël, 77550 Moissy Cramayel (FR); FERTE, Jean-Pierre, 77550 Moissy Cramayel (FR); LESCURE, Xavier Firmin Camille Jean, 77550 Moissy Cramayel (FR); GILLIA, Olivier, 77550 Moissy Cramayel (FR); RICCETTI, Bruno, 77550 Moissy Cramayel (FR)
(74) Mandataire: Ernest Gutmann - Yves Plasseraud S.A.S.
(86) Numéro de dépôt international: PCT/EP2009/062223
(87) Numéro de publication internationale: WO 2010/034697

(56) Documents cités:
- GB-A- 2 220 595
- JP-A- 7 232 284
- JP-A- 57 152 386
- JP-A- 2005 074 450
- US-A- 2 985 955

## Description

L'invention concerne un procédé d'assemblage par soudage diffusion de pièces de nature différente, l'une en titane et l'autre en acier, voir par exemple JP2005 074450 A.

Dans le cadre des recherches visant à réduire le bruit, la consommation et les émissions de CO2 des moteurs d'avion, on est amené à augmenter de façon très importante le couple transmis par l'arbre de turbine basse pression d'une turbomachine, sans modifier le diamètre et le poids de cet arbre, ce qui a conduit la déposante à étudier la réalisation d'un arbre à partie centrale en matériau composite à matrice de titane comportant à ses extrémités des pièces en acier à haute résistance, qui sont usinées avec des formes relativement complexes pour être reliées à d'autres composants de la turbomachine.

L'assemblage de la partie centrale en titane et des pièces d'extrémité en acier pose des problèmes qui n'ont pas été encore résolus de façon satisfaisante jusqu'à présent, d'autant que les jonctions titaneacier doivent présenter des caractéristiques mécaniques très élevées dans le cas des arbres de turbine.

L'invention propose à cet effet un procédé d'assemblage de pièces en titane et de pièces en acier par soudage diffusion, caractérisé en ce qu'il consiste :
- à placer deux intercalaires métalliques minces entre une pièce en titane et une pièce en acier, comprenant une feuille ou couche mince de niobium ou de vanadium, côté titane, et une feuille ou couche mince de cuivre, côté acier,
- à mettre sous vide l'ensemble des deux pièces et des deux intercalaires,
- et à soumettre cet ensemble à une compression isostatique à chaud, à une température comprise entre 900°C et 950°C environ et à une pression comprise entre 1000 bars et 1500 bars environ, cette compression isostatique à chaud étant suivie d'un refroidissement contrôlé.

La compression isostatique à chaud de l'ensemble formé par la pièce en titane, les intercalaires et la pièce en acier permet d'assembler la pièce en titane et la pièce en acier par soudage diffusion, les intercalaires évitant que du titane migre dans l'acier et que du fer migre dans le titane, ce qui créerait des phases intermétalliques fragilisant la jonction des deux pièces.

De façon générale, la compression isostatique à chaud consiste à réaliser un empilement d'éléments et à rendre étanche, en général par soudage, la périphérie de ces éléments, en laissant un orifice au niveau des interfaces pour le dégazage. Après dégazage, réalisé par pompage à travers l'orifice, on obture l'orifice de façon étanche, en général par soudage. L'empilement est ensuite soumis à une pression de gaz élevée (en général de l'argon) à une température élevée pendant une durée donnée. La compression isostatique à chaud élimine les jeux entre les éléments et réalise un soudage à l'état solide des éléments.

Dans le cas présent, la durée de la compression isostatique à chaud est comprise entre une heure et trois heures environ. Elle est d'environ deux heures dans un exemple particulier de mise en œuvre de l'invention, décrit ci-dessous.

Selon une autre caractéristique de l'invention, le procédé consiste ensuite à soumettre l'ensemble précité à un traitement thermique comprenant un premier palier à 800°C environ, suivi d'un refroidissement, et un second palier à 450°C environ, suivi d'un refroidissement.

L'ensemble précité est maintenu à une pression comprise entre 1000 bars et 1500 bars environ pendant ce traitement thermique.

Ces intercalaires ont une épaisseur faible, comprise entre 20 et 50µm environ et peuvent être formées par emboutissage de feuilles ou par dépôt de métal sur les extrémités des pièces à assembler.

Selon encore une autre caractéristique de l'invention, le procédé consiste à usiner les extrémités des pièces à assembler pour leur donner des formes conjuguées non planes, l'extrémité de la pièce en acier comprenant au moins une partie en saillie engagée dans une partie en creux de la pièce en titane.

Ces formes mettent à profit la différence de dilatation thermique entre le titane et l'acier pendant la compression isostatique à chaud, pour garantir le maintien du contact entre les deux pièces pendant le chauffage et le refroidissement.

La forme des extrémités des pièces peut être, par exemple, conique ou biconique.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe illustrant la jonction entre une pièce en titane et une pièce en acier,
- la figure 2 est un organigramme des étapes essentielles du procédé selon l'invention,
- la figure 3 est un diagramme des courbes de pression et de température pendant la compression isostatique à chaud et le traitement thermique dans le procédé selon l'invention,
- la figure 4 est une vue schématique en perspective d'une autre forme de liaison entre une pièce en titane et une pièce en acier,
- la figure 5 est une vue schématique en coupe de l'extrémité d'une pièce en acier, dans une variante de l'invention,
- la figure 6 est une demi vue schématique en coupe axiale d'une partie d'extrémité d'un arbre de turbine.

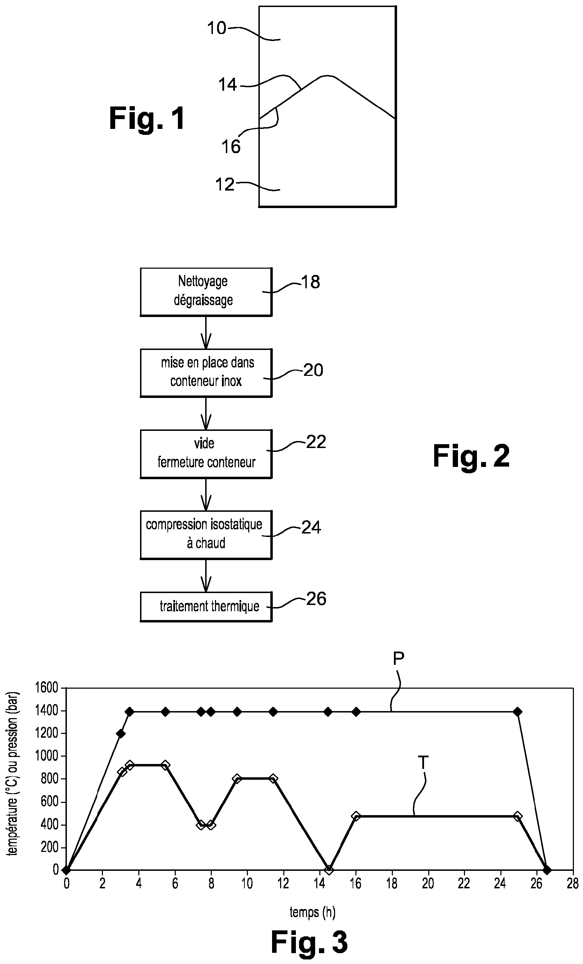

La figure 1 illustre l'assemblage d'une pièce 10 en titane et d'une pièce 12 en acier, la jonction entre ces deux pièces étant de forme conique et l'extrémité de la pièce 12 formant une pointe à sommet arrondi qui est engagée dans une cavité de forme conjuguée de l'extrémité de la pièce 10.

L'interface entre les deux pièces est formé d'une feuille ou couche mince 14 de niobium ou de vanadium, appliquée sur l'extrémité de la pièce 10 en titane, et d'une feuille ou couche mince 16 de cuivre, appliquée sur l'extrémité de la pièce en acier 12.

Ces feuilles intercalaires 14, 16 ont une épaisseur comprise par exemple entre 20 et 50µm environ et peuvent être formées par emboutissage de disques plans.

En variante, les couches intercalaires peuvent être formées directement sur les extrémités des pièces en titane et en acier, par dépôt de métal par un procédé connu, par exemple du type PVD (Physical Vapor Deposition), CVD (Chemical Vapor Deposition) ou par dépôt électrolytique.

Les étapes principales du procédé selon l'invention sont représentées schématiquement en figure 2.

Les pièces à assembler sont d'abord soumises en 18 à un nettoyage et un dégraissage soigneux puis en 20 sont mises en place dans un étui ou conteneur en acier inoxydable d'un type connu permettant d'appliquer ensuite une compression isostatique à chaud aux pièces qu'il contient.

Un vide secondaire est créé en 22 dans ce conteneur pendant douze heures environ, puis le conteneur est fermé de façon étanche par soudure.

Il est ensuite placé en 24 dans une enceinte de compression isostatique à chaud où l'ensemble pièce en titane-intercalaires-pièce en acier est soumis à une température et une pression élevées pendant une durée comprise entre une et trois heures environ, la température étant comprise entre 900 et 950°C et la pression entre 1000 et 1500 bars.

L'ensemble pièce en titane-intercalaires-pièce en acier est ensuite soumis à un traitement thermique 26 destiné à améliorer les qualités de l'acier, ce traitement thermique comprenant typiquement un palier à haute température, de l'ordre de 800°C par exemple, suivi d'un refroidissement contrôlé, et un autre palier à température élevée par exemple de l'ordre de 450°C, suivi d'un refroidissement contrôlé.

Dans un exemple particulier de réalisation de l'invention où la pièce 10 est en alliage de titane Ti6242 et la pièce 12 est en acier maraging M250, la durée de la compression isostatique à chaud est de deux heures, la pression étant de 1400 bars et la température de 925°C.

Le premier refroidissement est réalisé à une vitesse de 4 à 5°C par minute jusqu'à une température de 400°C environ, puis l'ensemble formé par les pièces assemblées 10, 12 et par les intercalaires est soumis à un traitement thermique comprenant un palier de deux heures à une température de 790°C et un palier de deux heures à une température de 455°C avec un refroidissement contrôlé après le premier palier avec une vitesse de refroidissement d'environ 4 à 5°C par minute jusqu'à la température ambiante. Le refroidissement après le palier à 455°C peut être réalisé à l'air.

De préférence, l'ensemble des deux pièces assemblées reste soumis à la pression de 1400 bars pendant toute la durée de la compression isostatique à chaud et du traitement thermique de l'acier.

Ces caractéristiques de compression isostatique à chaud et de traitement thermique de l'acier sont illustrées en figure 3, où la courbe P représente la variation de la pression appliquée aux pièces à assembler et la courbe T représente la variation de la température auxquelles ces pièces sont soumises, le temps en heures étant indiqué en abscisse, la température en degrés C et la pression en bars étant indiquées en ordonnée.

La compression isostatique à chaud permet, grâce à la pression hydrostatique de 1000 à 1500 bars, de passer les étapes de refroidissement du traitement thermique sans endommager les intercalaires. L'endommagement d'un métal ductile tel que le cuivre est retardé sous une forte pression hydrostatique car cette pression inhibe la formation et la croissance autour des défauts. On évite ainsi les problèmes rencontrés dans la technique antérieure où le traitement thermique de l'acier engendre, par effet de dilatation différentielle sous une pression uniaxiale, un cisaillement important dans les intercalaires et une destruction de l'intercalaire le plus ductile.

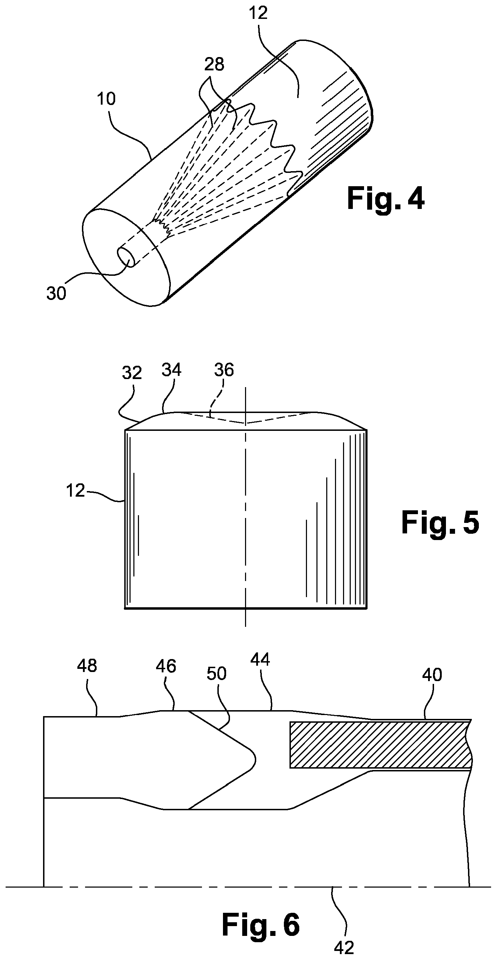

On a représenté schématiquement en figure 4 une variante de réalisation de la forme de la jonction entre la pièce 10 en titane et la pièce 12 en acier. Dans cette variante, l'extrémité de la pièce 12 en acier comporte une pointe tronconique avec des cannelures 28 qui s'étendent du sommet du cône vers la base de celui-ci le long des génératrices du cône. Les deux pièces 10 et 12 sont en outre formées avec un alésage central 30.

Une autre forme de réalisation de la jonction entre les deux pièces est représentée schématiquement en figure 5, pour la pièce 12 en acier.

L'extrémité de cette pièce destinée à être assemblée avec l'extrémité de la pièce en titane, est de forme biconique et comprend une surface tronconique 32 s'étendant de la périphérie cylindrique de la pièce 12 vers l'axe de cette pièce et se trouvant en saillie sur la pièce 12, cette surface tronconique étant raccordée par un arrondi convexe 34 à une surface conique 36 qui s'étend en sens inverse de la première et qui est formée en creux sur l'extrémité de la pièce 12, cette surface 36 s'étendant de l'arrondi 34 jusqu'à l'axe central de la pièce 12.

L'angle au sommet de la surface tronconique 32 est par exemple de 120°, tandis que celui de la surface conique 36 est d'environ 160°.

La forme de l'extrémité de la pièce 10 en titane est la conjuguée de celle représentée en figure 5.

On a représenté schématiquement en figure 6 une partie d'un arbre de turbine basse pression qui comprend une partie centrale 40 en un matériau composite à matrice de titane, cette partie centrale étant tubulaire d'axe 42 et étant de plus grande épaisseur à son extrémité 44 de liaison à l'extrémité correspondante 46 d'un embout tubulaire 48 en acier à haute résistance qui forme une pièce de liaison à un autre composant d'une turbomachine telle qu'un turboréacteur ou un turbopropulseur d'avion.

La réalisation de cet embout 48 en acier permet de lui donner par usinage toute forme appropriée, qui peut être relativement complexe.

L'autre extrémité de la partie centrale 40 de l'arbre, non représentée, est également reliée à un embout du même type que celui de la figure 6.

La liaison des extrémités 44 de la partie centrale 40 avec les embouts 48 se fait par exécution du procédé de soudage diffusion décrit cidessus, avec des intercalaires de niobium (ou de vanadium) et de cuivre entre les parties en titane et en acier.

La jonction 50 entre chaque extrémité de la partie centrale 40 avec un embout 48 a une forme conique à sommet arrondi en arc de cercle orienté vers la partie centrale 40.

Dans un exemple de réalisation, l'arc de cercle au sommet de la jonction a un rayon supérieur à 20mm et l'angle au sommet est d'environ 60°.

Dans un exemple particulier de réalisation de l'invention, la partie centrale 40 de l'arbre de turbine basse pression a un diamètre extérieur de 81 mm et est en matériau composite à matrice de Ti6242 et à fibres longues de SIC et les embouts 48 sont en un acier maraging M250. Les jonctions des extrémités de la partie centrale 40 avec les embouts 48 sont capables de transmettre un couple correspondant à une perte d'aube, c'est-à-dire de 70000 Nm environ. Par ailleurs, ces jonctions peuvent supporter, sans apparition de criques, 25000 décollages au cours desquels le couple transmis est de l'ordre de 41500 Nm (le décollage étant la phase de vol où le couple transmis est maximal dans des conditions d'utilisation normales).

## Revendications

1. Procédé d'assemblage de pièces en titane et de pièces en acier par soudage diffusion, comprenant comme étapes celles:
- de placer deux intercalaires métalliques minces (14, 16) entre une pièce (10) en titane et une pièce (12) en acier, les deux intercalaires comprenant une feuille ou couche mince de niobium ou de vanadium, côté titane, et une feuille ou couche mince de cuivre, côté acier,
- de mettre sous vide l'ensemble des deux pièces et des deux intercalaires,
- et de soumettre ledit ensemble à une compression isostatique à chaud, **caractérisé en ce que** la compression isostatique à chaud est suivie d'un refroidissement contrôlé et est conduite à une température comprise entre 900°C et 950°C et à une pression comprise entre 1000 et 1500 bars.

2. Procédé selon la revendication 1, **caractérisé en ce que** la durée de la compression isostatique à chaud est comprise entre une heure et trois heures environ.

3. Procédé selon la revendication 1 ou 2, **caractérisé en ce qu'**il consiste ensuite à soumettre l'ensemble à un traitement thermique comprenant un premier palier à 800°C environ, suivi d'un refroidissement, un second palier à 450°C environ et un refroidissement.

4. Procédé selon la revendication 3, **caractérisé en ce qu'**il consiste à maintenir l'ensemble à une pression comprise entre 1000 et 1500 bars environ pendant le traitement thermique.

5. Procédé selon l'une des revendications précédentes, **caractérisé en ce que** les intercalaires ont une épaisseur d'environ 20 à 50µm.

6. Procédé selon l'une des revendications précédentes, **caractérisé en ce qu'**il consiste à usiner les extrémités des pièces à assembler pour leur donner des formes conjuguées non planes, l'extrémité de la pièce (12) en acier comprenant au moins une partie en saillie engagée dans une partie en creux de la pièce (10) en titane.

7. Procédé selon la revendication 6, **caractérisé en ce qu'**il consiste à donner une forme conique ou biconique (32, 36) aux extrémités des pièces (10, 12).

8. Procédé selon l'une des revendications 1 à 7, **caractérisé en ce que** les intercalaires sont formées par dépôt de métal sur les extrémités des pièces (10,12) assemblées.

9. Procédé selon l'une des revendications 1 à 7, **caractérisé en ce qu'**il consiste à emboutir les intercalaires (14, 16) pour leur donner une forme correspondant à celle des extrémités des pièces (10, 12).

## Patentansprüche

1. Verfahren zum Verbinden von Werkstücken aus Titan und Werkstücken aus Stahl durch Diffusionsschweißen, umfassend die folgenden Schritte:
- Anordnen von zwei dünnen metallischen Zwischenlagen (14, 16) zwischen einem Werkstück (10) aus Titan und einem Werkstück (12) aus Stahl, wobei die beiden Zwischenlagen auf der Titanseite eine Folie oder dünne Schicht aus Niob oder Vanadium und auf der Stahlseite eine Folie oder dünne Schicht aus Kupfer enthalten,
- Evakuieren der aus den beiden Werkstücken und den beiden Zwischenlagen gebildeten Anordnung,
- Unterziehen der Anordnung einem heißisostatischen Pressen,
**dadurch gekennzeichnet, dass** auf das heißisostatische Pressen eine kontrollierte Abkühlung folgt und es bei einer Temperatur zwischen 900°C und 950°C und einem Druck zwischen 1000 und 1500 bar erfolgt.

2. Verfahren nach Anspruch 1,
**dadurch gekennzeichnet, dass** die Dauer des heißisostatischen Pressens zwischen etwa einer Stunde und drei Stunden liegt.

3. Verfahren nach Anspruch 1 oder 2,
**dadurch gekennzeichnet, dass** es darin besteht, die Anordnung anschließend einer Wärmebehandlung zu unterziehen, die eine erste Stufe bei etwa 800°C, gefolgt von einer Abkühlung, und eine zweite Stufe bei etwa 450°C und Abkühlung umfasst.

4. Verfahren nach Anspruch 3,
**dadurch gekennzeichnet, dass** es darin besteht, die Anordnung während der Wärmebehandlung unter einem Druck von etwa 1000 bis 1500 bar zu halten.

5. Verfahren nach einem der vorhergehenden Ansprüche,
**dadurch gekennzeichnet, dass** die Zwischenlagen eine Dicke von etwa 20 bis 50 µm haben.

6. Verfahren nach einem der vorhergehenden Ansprüche,
**dadurch gekennzeichnet, dass** es darin besteht, die Enden der zu verbindenden Werkstücke zu bearbeiten, um ihnen komplementäre, nicht ebene Formen zu geben, wobei das Ende des Werkstücks (12) aus Stahl mindestens einen vorstehenden Abschnitt umfasst, der in einen vertieften Abschnitt des Werkstücks (10) aus Titan eingreift.

7. Verfahren nach Anspruch 6,
**dadurch gekennzeichnet, dass** es darin besteht, den Enden der Werkstücke (10, 12) eine konische oder doppelkonische Form (32, 36) zu geben.

8. Verfahren nach einem der Ansprüche 1 bis 7,
**dadurch gekennzeichnet, dass** die Zwischenlagen durch Abscheiden von Metall an den Enden der verbundenen Werkstücke (10, 12) gebildet werden.

9. Verfahren nach einem der Ansprüche 1 bis 7,
**dadurch gekennzeichnet, dass** es darin besteht, die Zwischenlagen (14, 16) tiefzuziehen, um ihnen eine Form zu geben, die derjenigen der Enden der Werkstücke (10, 12) entspricht.

## Claims

1. A method of assembling together titanium parts and steel parts by diffusion welding, the method being **characterized in that** it comprises steps consisting in:
▪ interposing two thin metal layers (14, 16) between a titanium part (10) and a steel part (12), the two metal layers comprising a thin layer or thin foil of niobium or vanadium, facing the titanium, and a thin layer or thin foil of copper, facing the steel;
▪ putting under vacuum the assembly comprising the two parts and the two interposed metal layers; and · subjecting said assembly to a hot isostatic compression,
**characterized in that** the hot isostatic compression is followed by a controlled cooling and realized at a temperature comprised in the range 900°C to 950°C, and at a pressure comprised in the range 1000 bars to 1500 bars.

2. A method according to claim 1, **characterized in that** the duration of the hot isostatic compression lies in the range one hour to three hours, approximately.

3. A method according to claim 1 or claim 2, **characterized in that** it subsequently consists in subjecting the assembly to heat treatment including a first dwell at about 800°C, followed by cooling, a second dwell at about 450°C, and cooling.

4. A method according to claim 3, **characterized in that** it consists in maintaining the assembly at a pressure lying in the range 1000 bars to 1500 bars, approximately, during the heat treatment.

5. A method according to any preceding claim, **characterized in that** the interposed metals present a thickness lying in the range about 20 µm to about 50 µm.

6. A method according to any preceding claim, **characterized in that** it consists in machining the ends of the parts for assembling together in order to give them non-plane complementary shapes, the end of the steel part (12) including at least one projecting portion engaged in an indentation in the titanium part (10).

7. A method according to claim 6, **characterized in that** it consists in giving a conical or a biconical shape (32, 36) to the ends of the parts (10, 12).

8. A method according to any one of claims 1 to 7, **characterized in that** the interposed metals are formed by depositing metal on the ends of the parts (10, 12) that are to be assembled.

9. A method according to any one of claims 1 to 7, **characterized in that** it consists in stamping the interposed metals (14, 16) to give them a shape corresponding to the shape of the ends of the parts (10, 12).
